# EUROPÄISCHE PATENTSCHRIFT

(11) **EP 3 091 630 B1**
(45) Veröffentlichungstag und Bekanntmachung des Hinweises auf die Patenterteilung: **17.07.2019**
(21) Anmeldenummer: 16161848.3
(22) Anmeldetag: 23.03.2016
(51) Int. Cl.: H02J 3/14, H02J 13/00, H05B 37/02

(54) **DOPPELTARIFSCHALTEINRICHTUNG, SYSTEM MIT EINER DOPPELTARIFSCHALTEINRICHTUNG SOWIE VERFAHREN ZUM BETREIBEN EINER DOPPELTARIFSCHALTEINRICHTUNG**
DOUBLE TARIFF SWITCHING DEVICE, SYSTEM WITH A DOUBLE TARIFF SWITCHING DEVICE AND METHOD FOR OPERATING A DOUBLE TARIFF SWITCHING DEVICE
DISPOSITIF DE COMMUTATION A DOUBLE BAREME, SYSTEME COMPRENANT UN DISPOSITIF DE COMMUTATION A DOUBLE BAREME ET PROCEDE DE FONCTIONNEMENT D'UN DISPOSITIF DE COMMUTATION A DOUBLE BAREME

(30) Priorität: 08.05.2015 DE 102015107208
(43) Veröffentlichungstag der Anmeldung: 09.11.2016
(73) Patentinhaber: innogy Netze Deutschland GmbH, 45128 Essen (DE)
(72) Erfinder: Kneitinger, Hans-Werner, 40882 Ratingen (DE)
(74) Vertreter: Cohausz & Florack

(56) Entgegenhaltungen:
- DE-A1-102004 053 709
- DE-A1-102009 047 794
- DE-C1- 19 820 767
- US-A1- 2011 264 286

## Beschreibung

Der Gegenstand betrifft ein System mit einer Doppeltarifschalteinrichtung sowie ein Verfahren zum Betreiben einer Doppeltarifschalteinrichtung.

Doppeltarifschalteinrichtungen sind in elektrischen Versorgungsnetzen hinlänglich bekannt. Solche Schalteinrichtungen schalten bestimmte Verbraucher zeitabhängig auf das Energieversorgungsnetz. Solche Verbraucher sind beispielsweise Nachtspeicheröfen, Wärmepumpen und dergleichen. Doppeltarife unterteilen sich in der Regel in einen Hochtarif und einen Niedertarif. Im Niedertarif ist der Preis für die bezogene Verbrauchsmenge, insbesondere die elektrische Energie pro kWh niedriger als im Hochtarif. Die Zeiten, zu denen ein Hochtarif und zu denen ein Niedertarif anwendbar ist, sind in der Regel festgelegt. So ist es beispielsweise regelmäßig üblich, in Zeiten beispielsweise zwischen 22 Uhr und 6 Uhr die Niedertarifzeit anzuwenden und in den restlichen Zeiten die Hochtarifzeit.

Die DE 10 2004 053 709 A1 offenbart eine Vorrichtung zur Fernsteuerung elektrischer Energieverbraucher mit einem Rundsteuerempfänger, der ein Eingangsteil, ein Auswerteteil und ein Ausgangsteil aufweist.

Die DE 10 2009 047 794 A1 zeigt einen Smart Adapter, welcher zwischen Stromversorgung und Haushaltsgerät geschaltet ist und somit eine intelligente An- und Abschaltung vornimmt. Um eine geeignete Abrechnung für Doppeltarife zu ermöglichen, werden an herkömmliche Doppeltarifschalteinrichtungen Doppeltarifzähler angeschlossen. Solche können mechanische oder elektronische Zähler für einen Doppeltarif sein. Die elektronischen Zähler können als intelligente Zähler oder als intelligente Messsysteme, insbesondere mit eigenem Kommunikationsausgang gebildet sein.

Um nun Doppeltarifanwendungen mit Hilfe einer Zählerschnittstelleneinrichtung, insbesondere eines Smart Meter Gateways (SMGw) über ein Local Metrological Network zu ermöglichen, ist es notwendig, dass die Zählerschnittstelleneinrichtung sowohl Kenntnis von den durch den Verbrauchsmengenzähler erfassten Messwerten als auch der dazugehörigen Tarifierung, insbesondere dem Zustand der Doppeltarifschalteinrichtung hat.

Eine unmittelbare Kommunikation zwischen der Doppeltarifschalteinrichtung und der Zählerschnittstelleneinrichtung ist jedoch vielfältigen Beschränkungen unterworfen. So darf aus Sicherheitsgründen ein Schaltbefehl von einer Zählerschnittstelleneinrichtung an eine Doppeltarifschalteinrichtung nur in ganz wenigen Ausnahmefällen übertragen werden. Insbesondere ist eine Kommunikation zwischen der Schalteinrichtung und der Zählerschnittstelleneinrichtung nicht gestattet. Im Stand der Technik ist es erforderlich, dass eine Doppeltarifschalteinrichtung an die jeweilige Nutzerinstallation angepasst werden muss, insbesondere hinsichtlich Netzzugangsdaten, wie Passwort, IP-Adressen und dergleichen. Außerdem sind die bisher vorgeschlagenen Lösungen stets von der Funktionsfähigkeit des Hausanschlussnetzes (HAN) des Nutzers abhängig und bei Ausfall des Hausanschlussnetzes kann es zu Störungen der Übertragung von Schaltsignalen von der Zählerschnittstelleneinrichtung an die Doppeltarifschalteinrichtung kommen. Schließlich ist die Zugriffshoheit auf einen Schaltbefehl bei vorgeschlagenen Lösungen nicht mehr ausschließlich im Bereich des Messstellenbetreibers, sondern auch im Bereich des Hausanschlussnetzes des Nutzers.

Bisher vorgeschlagene Lösungen zur Verbindung einer Doppeltarifschalteinrichtung mit einer Zählerschnittstelleneinrichtung sind auch problematisch hinsichtlich möglicher Verschlüsselungsfunktionen innerhalb eines Hausanschlussnetzes. In diesen Fällen müssen Entschlüsselungsgeheimnisse mitgeteilt werden, um eine Kommunikation überhaupt zu ermöglichen. Auch ist nicht geklärt, wie Schaltfunktionen überhaupt ausgelöst werden können, wenn entweder die Zählerschnittstelleneinrichtung oder die Netzinfrastruktur des Kunden gestört ist. Auch eine Einbindung von intelligenten Zählern ist bei bisher vorgeschlagenen Lösungen problematisch.

Aus diesem Grunde liegt dem Gegenstand die Aufgabe zugrunde, eine Doppeltarifschalteinrichtung zur Verfügung zu stellen, welche unter diversen Betriebsbedingungen zuverlässig arbeitet und gleichzeitig mit geringem Aufwand in ein System mit einer Zählerschnittstelleinrichtung einbindbar ist. Die gegenständliche Doppeltarifschalteinrichtung soll sowohl für intelligente Zähler als auch für intelligente Messsysteme geeignet sein. Installations-, Betriebs- und Wartungsaufwand soll minimiert werden.

Zur Lösung dieser Aufgabe wird der Gegenstand der unabhängigen Ansprüche 1 und 11 vorgeschlagen. Generell wird der Schaltzustand eines Schalters, der zum Schalten einer Verbindung zwischen einem Verbraucher und einem elektrischen Energieversorgungsnetz verwendet wird, überwacht bzw. erfasst. Hierzu hat die Doppeltarifschalteinrichtung eine Zustandsermittlungseinrichtung. Mit Hilfe der Zustandsermittlungseinrichtung wird der Schaltzustand des Schalters erfasst. Das Ergebnis der Zustandsermittlung, mithin der erfasste Schaltzustand, kann durch die Zustandsermittlungseinrichtung über eine Kommunikationsschnittstelle ausgegeben werden.

In diesem Zusammenhang sei erwähnt, dass eine Doppeltarifschalteinrichtung zumindest zwei Tarife abbilden kann. Eine Mehrzahl an Tarifen kann ebenfalls abgebildet sein, was auch unter den Begriff Doppeltarif fallen soll. In diesem Fall kann es auch möglich sein, dass mehr als ein Schalter überwacht wird. Der Zustand eines jeden einzelnen Schalters und/oder die Kombination von Zuständen von Schaltern kann dann relevant für die Tarifierung sein.

Gegenständlich ist erkannt worden, dass die Schalthoheit und/oder Zeithoheit innerhalb der Doppeltarifschalteinrichtung verbleiben kann. Auch kann eine Information über einen Schaltzustand zumindest an die Zählerschnittstelleneinrichtung übermittelt werden, um dort oder in einer räumlich entfernten und mit der Zählerschnittstelleneinrichtung in Kommunikationsverbindung stehenden Zentrale einen Doppeltarif abbilden zu können. In der Zählerschnittstelleneinrichtung oder der Zentrale kann hierdurch ein Tarif einem Messwert zugeordnet werden. Schalthandlungen in der Schalteinrichtung für die daran angeschlossenen Verbraucher sind ebenfalls ermöglicht. Zusätzlich zu herkömmlichen Doppeltarifschalteinrichtungen wird gegenständlich der Schaltzustand des Schalters mit einer Zustandsermittlungseinrichtung erfasst und das Ergebnis der Erfassung ausgegeben. Eine externe Schnittstelle zum Empfangen von Schaltsignalen ist nicht notwendig, wobei eine solche weiterhin genutzt werden kann. Vielmehr kann die Doppeltarifschalteinrichtung nach dem Gegenstand weiterhin eine Umschaltung abhängig von einer integrierten Schaltuhr oder einem Rundsteuergerät durchführen. Bei einem Rundsteuergerät wird das Schaltsignal in der Regel über die Leitungen des Energieversorgungsnetzes empfangen, so dass auch hier keine zusätzliche Schnittstelle in der Doppeltarifschalteinrichtung vorgesehen sein muss, um einen Schaltvorgang auszulösen.

Sicherheitstechnische Vorgaben verlangen es, dass Schaltbefehle nicht über das Local Metrological Network (LMN) in eine Doppeltarifschalteinrichtung eingespeist werden dürfen. Ferner verfügen herkömmliche Doppeltarifschalteinrichtungen weder über Schnittstellen an ein LMN, noch an ein Wide Area Network (WAN) oder ein Controllable Load System (CLS). Somit ist das Einspeisen eines Schaltbefehls in eine Doppeltarifschalteinrichtung problematisch, was mit der gegenständlichen Lösung gelöst wird. Das Schalten bzw. die Schaltungshoheit verbleibt in der Doppeltarifschalteinrichtung und lediglich der Schaltzustand des Schalters bzw. die Information des Schaltzustands des Schalters wird über eine Kommunikationsschnittstelle ausgegeben. Über die Kommunikationsschnittstelle kann die Information über den Schaltzustand beispielsweise an die Zählerschnittstelleneinrichtung, z.B. ein Smart Meter Gateway ausgegeben werden.

Gemäß einem vorteilhaften Ausführungsbeispiel wird vorgeschlagen, dass der Empfänger ein Rundsteuersignalempfänger ist und zum Empfangen von Rundsteuersignalen eines zentralen Servers eingerichtet ist, insbesondere zum Empfangen von Rundsteuersignalen über Leitungen des Energieversorgungsnetzes oder von Rundsteuersignalen über eine Luftschnittstelle. Mit Hilfe von Rundsteuerbefehlen ist es möglich, dass der Energieversorger zeitweise eine Verbindung zwischen einem Verbraucher und einem elektrischen Energieversorgungsnetzes über eine Schalteinrichtung zu- und/oder abschaltet. Das Zu- und/oder Abschalten erfolgt tarifabhängig. Das heißt, dass es in der Regel einen Niedertarif und einen Hochtarif gibt und zu Zeiten des Niedertarifs der Schalter geschlossen wird. Gleichzeitig zählt ein Doppeltarifzähler zu diesen Zeiten den Energieverbrauch, welcher zu den Konditionen des Niedertarifs abgerechnet werden kann. Zu Zeiten des Hochtarifs wird der Schalter geöffnet. Gleichzeitig zählt ein Doppeltarifzähler zu diesen Zeiten den Energieverbrauch, welcher zu den Konditionen des Hochtarifs abgerechnet werden kann.

Es ist jedoch auch gegenständlich möglich, dass der Empfänger zum Empfangen von Schaltsignalen einer in der Doppeltarifschalteinrichtung angeordneten Schaltuhr eingerichtet ist. Es ist auch möglich, dass eine Schaltuhr vorzugsweise statisch programmierte Schaltzeiten zwischen Niedertarif und Hochtarif kennt. Zu diesen Schaltzeiten schaltet die Schaltuhr autonom den Schalter. Gleichzeitig wird in einem Doppeltarifzähler der Niedertarif gezählt.

Um den Schaltzustand ausgeben zu können, wird gemäß einem vorteilhaften Ausführungsbeispiel vorgeschlagen, dass die Kommunikationsschnittstelle gemäß einem LMN Protokoll eingerichtet ist. Die Doppeltarifschalteinrichtung hat somit eine LMN-Schnittstelle. Gegenständlich ist jedoch erkannt worden, dass über die LMN-Schnittstelle kein Schaltbefehl in die Doppeltarifschalteinrichtung eingespeist wird, sondern lediglich Informationen über den Schaltzustand des Schalters innerhalb der Doppeltarifschalteinrichtung ausgegeben werden kann. Hiermit werden alle Anforderungen an die Sicherheit von Doppeltarifschalteinrichtungen erfüllt.

Zusätzlich oder alternativ kann die Kommunikationsschnittstelle als serielle Schnittstelle zum Verbinden mit einem Verbrauchsmengenzähler und/oder einer Zählerschnittstelleneinrichtung eingerichtet sein. Eine Zählerschnittstelleneinrichtung ist hinlänglich als Smart Meter Gateway (SMGw) bekannt. Gegenständlich wird die Doppeltarifschalteinrichtung lediglich um eine Funktion "Schaltzustandserfassung" erweitert. Der erfasste Schaltzustand kann gegenständlich über die Kommunikationsschnittstelle ausgegeben werden und beispielsweise in einer Zählerschnittstelleneinrichtung erfasst werden.

Die entsprechende Tarifierung des Verbrauchs kann dann in der Zählerschnittstelleneinrichtung erfolgen. Hierzu kann die Zählerschnittstelleneinrichtung eine Verbindung mit einem Verbrauchsmengenzähler haben. Die Zählerschnittstelleneinrichtung hat vorzugsweise die Zeithoheit innerhalb des Messsystems und kann den Zeitpunkt erfassen, zu dem ein Schaltzustand des Schalters verändert wird. Gleichzeitig kann die Zählerschnittstelleneinrichtung eine Information zu einem Zählerstand von einem ebenfalls mit der Zählerschnittstellenverbindung verbundenen Verbrauchsmengenzähler erfassen und die Messwerte einem jeweiligen Tarif zuordnen. Hierbei erfolgt die Zuordnung zu einem Tarif vorzugsweise abhängig von der erfassten Information des Schaltzustands, mithin der Lage des Schalters.

Die entsprechende Tarifierung des Verbrauchs kann alternativ auch in einer Zentrale erfolge. Es kann eine Kommunikation zwischen der Zählerschnittstelleneinrichtung in Kommunikation und der Zentrale erfolgen. Die Zählerschnittstelleneinrichtung kann eine Verbindung mit einem Verbrauchsmengenzähler haben. Die Zählerschnittstelleneinrichtung hat vorzugsweise die Zeithoheit innerhalb des Messsystems und kann den Zeitpunkt erfassen, zu dem ein Schaltzustand des Schalters verändert wird. Gleichzeitig kann die Zählerschnittstelleneinrichtung eine Information zu einem Zählerstand von einem ebenfalls mit der Zählerschnittstellenverbindung verbundenen Verbrauchsmengenzähler erfassen. Die Information zu dem Schaltzustand und die Information zu dem Messwert kann von der Zählerschnittstelleneinrichtung an die Zentrale übermittelt werden, Auch kann die Zeitinformation an die Zentrale übermittelt werden, wobei die Zeitinformation auch in der Zentrale beim Empfang eines geänderten Schaltzustands erfasst werden. Mit Hilfe der Information zum Schaltzustand und der Zeitinformation kann die Zentrale einem Messwerte einem jeweiligen Tarif zuordnen. Hierbei erfolgt die Zuordnung zu einem Tarif vorzugsweise abhängig von der erfassten Information des Schaltzustands, mithin der Lage des Schalters.

Zusätzlich oder alternativ wird auch vorgeschlagen, dass die Kommunikationsschnittstelle als RS485-Schnittstelle eingerichtet ist. Hierdurch ist für die Kommunikation zwischen Kommunikationsschnittstelle und Zählerschnittstelleneinrichtung eine bekannte Schnittstellt im Einsatz, so dass Anpassungen an der Schnittstelle nicht notwendig sind. Für die die Kommunikation kann z.B. das LMN Protokoll nach technischer Richtlinie "BSI TR-1309-1 Anlage IV, Teil a" zum Einsatz kommen.

Gemäß einem Ausführungsbeispiel wird vorgeschlagen, dass die Zählerschnittstelleneinrichtung mittels eines Tarifanwendungsfalls (TAF) 5 über die Kommunikationsschnittstelle die Information zu dem Schaltzustand des Schalters erfasst. Die Doppeltarifschalteinrichtung gibt den Schaltzustand des Schalters im Sinne eines TAF 3 bzw. TAF 4 aus und die Zählerschnittstelleneinrichtung wertet diese Tarifanwendungsfälle entsprechend aus.

Gemäß einem Ausführungsbeispiel wird vorgeschlagen, dass die Zählerschnittstelleneinrichtung die Information über den Schaltzustand insbesondere mittels eines Tarifanwendungsfalls (TAF) 5 über ein Weitverkehrsnetz an die Zentrale übermittelt. Die Doppeltarifschalteinrichtung kann den Schaltzustand des Schalters im Sinne eines TAF 3 bzw. TAF 4 ausgeben. Die Zählerschnittstelleneinrichtung kann die Information an die Zentrale weiterleiten. Dort werden diese Tarifanwendungsfälle entsprechend ausgewertet.

Gemäß einem Ausführungsbeispiel wird vorgeschlagen, dass die Zustandsermittlungseinrichtung ein Lagesensor eingerichtet zur Erfassung der Schaltposition des Schalters und/oder das der Schalter ein Schaltrelais ist. Mit Hilfe des Lagesensors kann erfasst werden, ob der Schalter in einer Ein- oder Ausposition ist. Entsprechend kann eine Information über den Schaltzustand, beispielsweise auch in binärer Form, über die Kommunikationsschnittstelle ausgegeben werden. Ist der Schalter ein Schaltrelais, kann dieses über ein Schaltimpuls ein- und ausgeschaltet werden. Ein solcher Schaltimpuls kann z.B. entweder von einem Rundsteuerempfänger oder einer Schaltuhr stammen. Die Zustandsermittlungseinrichtung kann auch zur Erfassung des Schaltimpulses eingerichtet sein und entsprechend des Schaltimpulses den Zustand des Schalters erfassen. Dies kann insbesondere in der Form eines induktiven und/oder kapazitiven Sensors, eines Hall Sensors und/oder eines optischen Sensors der Fall sein.

Gemäß einem Ausführungsbeispiel wird vorgeschlagen, dass die Zustandsermittlungseinrichtung zum automatischen Senden des Schaltzustands, insbesondere bei einer Änderung des Schaltzustands eingerichtet ist. In diesem Sinne kann ein Empfangen der Information zu dem Schaltzustand beispielsweise als ein Tarifanwendungsfall 3 oder 4 in der Zählerschnittstelleneinrichtung gewertet werden.

Kumulativ oder alternativ ist es auch möglich, dass die Zustandsermittlungseinrichtung zum Empfangen einer Abfrage des Schaltzustands und zum darauffolgenden Senden des erfassten Schaltzustands eingerichtet ist. Ein solches Abfragen des Schaltzustands kann beispielsweise als TAF 5 gewertet werden und beispielsweise von der Zählerschnittstelleneinrichtung eingeleitet werden. Die Zählerschnittstelleneinrichtung kann den ausgesendeten Schaltzustand erfassen und Messwerte der Verbrauchsmengenzähler auswerten. Abhängig von dem Schaltzustand können die Messwerte verschiedenen Tarifen zugeordnet werden. Die Zuordnung von Messwerten zu Tarifen kann in der Hoheit der Zählerschnittstelleneinrichtung verbleiben. Das Erfassen der Messwerte erfolgt in zumindest einem Verbrauchsmengenzähler, insbesondere in einem Messgerät, beispielweise in sogenannten Stromzählern als auch sogenannten intelligenten Stromzählern beispielsweise einem sogenannten Smart Meter.

Anstelle der Auswertung in der Zählerschnittstelleneinrichtung kann auch eine Auswertung in der Zentrale erfolgen. Die lokal durch die Zählerschnittstelleneinrichtung erfassten Informationen können an eine entfernte Zentrale gesendet werden und dort kann eine Zuordnung der Messwerte zu einem Tarif erfolgen. Insbesondere kann eine Übertragung der Informationen in zeitlichen Abständen, insbesondere in Intervallen, erfolgen. Ein zeitlicher Abstand bzw. ein Intervall kann 5 Minuten, 10 Minuten, 15 Minuten, 30 Minuten oder dergleichen betragen. Als weitere Option kann lokal eine Anzahl an erfassten Schaltzeitpunkten und Zuständen gespeichert werden. Der Inhalt eines solchen Speichers kann für einen späteren Abruf, Verarbeitung und/oder Kontrolle durch die Zentrale zwischengespeichert werden.

In einer Erweiterung kann es möglich sein, dass der Schalter zusätzlich über eine Schnittstelle mit einem CLS verbunden ist. Über das CLS kann der Schalter bzw. die Schalteinrichtung des Schalters einen Schaltbefehl empfangen und zusätzlich, insbesondere unabhängig von dem Rundsteuersignalempfänger und/oder der Schaltuhr, ein Schaltsignal auslösen. In diesem Falle läge die Schalthoheit nicht mehr ausschließlich in der Doppeltarifschalteinrichtung, sondern zusätzlich auch in einem CLS.

Die Doppeltarifschalteinrichtung kann einen energetischen Eigenverbrauch haben. Dieser energetische Eigenverbrauch kann vorzugsweise gemäß einem Ausführungsbeispiel über einen Anschluss an das Energieversorgungsnetz gespeist sein. Es ist jedoch auch möglich, insbesondere für die Fälle, in denen die Last der Doppeltarifschalteinrichtung eine maximale Last auf einen LMN nicht überschreitet, dass die Energieversorgung der Doppeltarifschalteinrichtung über die Kommunikationsschnittstelle über das LMN gespeist ist.

Ein weiterer Aspekt ist ein System mit einer zuvor beschriebenen Doppeltarifschalteinrichtung sowie einer Zählerschnittstelleneinrichtung. Das System kann zusätzlich mit einem Verbrauchsmengenzähler, insbesondere einem Stromzähler, einem Smart Meter, einem Meter, einer Steuerbox oder dergleichen gebildet sein. Das System ist gegenständlich dadurch gekennzeichnet, dass die Schnittstelleneinrichtung mit der Kommunikationsschnittstelle elektrisch verbunden ist und dass die Zählerschnittstelleneinrichtung über die Kommunikationsschnittstelle den Schaltzustand erfasst.

Die Schalthoheit verbleibt in diesem System innerhalb der Doppeltarifschalteinrichtung. Die Zählerhoheit, insbesondere die Messwertbildung kann in der Zählerschnittstelleneinrichtung abhängig von der Information über den Schaltzustand erfolgen, der von der Kommunikationsschnittstelle der Doppeltarifschalteinrichtung erfasst werden kann. Die Zählerhoheit, insbesondere die Messwertbildung kann auch in einer Zentrale abhängig von von der Zählerschnittstelleneinrichtung empfangenen Information über den Schaltzustand erfolgen, der von der Kommunikationsschnittstelle der Doppeltarifschalteinrichtung erfasst werden kann.

Vorteilhaft ist es, wenn gemäß einem Ausführungsbeispiel die Zählerschnittstelleneinrichtung mit der Kommunikationsschnittstelle und zumindest einem Verbrauchsmengenzähler über eine gleiche Schnittstelle verbunden ist. Insofern kann über die gleiche Schnittstelle zum Einen die Lage des Schalters von der Zählerschnittstelleneinrichtung erfasst werden und gleichzeitig ein Messwert des Verbrauchsmengenzählers. Hierüber kann eine Messwertbildung in der Zählerschnittstelleneinrichtung abhängig von der Lage des Schalters erfolgen und die Messwerte können entsprechend der Lage des Schalters einem Tarif zugeordnet werden. Auch kann der Messwert und eine Information zum Schaltzustand an eine Zentrale übermittelt werden und dort kann eine Messwertbildung Zählerschnittstelleneinrichtung abhängig von der Lage des Schalters erfolgen. Die Messwerte können in der Zentrale entsprechend der Lage des Schalters einem Tarif zugeordnet werden.

Die Zeithoheit kann bei diesem System innerhalb der Zählerschnittstelleneinrichtung und/oder der Zentrale verbleiben. Das heißt, dass die Zählerschnittstelleneinrichtung und/oder die Zentrale stets die für die Messwertbildung relevante Zeit hat. Wenn eine Schaltung erfolgt, bestimmt die Zählerschnittstelleneinrichtung und/oder die Zentrale den Zeitpunkt dieser Schaltung und kann abhängig davon eine Zuordnung zu einem Tarif durchführen.

Wie bereits erwähnt, kann die Messwertbildung insbesondere die Zuordnung von Messwerten zu Tarifen innerhalb der Zählerschnittstelleneinrichtung erfolgen. Hierzu kann die Zählerschnittstelleneinrichtung derart eingerichtet sein, dass bei einem Empfangen einer Änderung des Schaltzustands ein Zählerstand des Verbrauchsmengenzählers erfasst wird und dieser Zählerstand verwendet wird, um eine Verbrauchsmenge zu bestimmen und gegebenenfalls einem Tarif zuzuordnen.

Auch kann die Messwertbildung insbesondere die Zuordnung von Messwerten zu Tarifen innerhalb der Zentrale erfolgen. Hierzu kann die Zählerschnittstelleneinrichtung zunächst derart eingerichtet sein, dass bei einem Empfangen einer Änderung des Schaltzustands ein Zählerstand des Verbrauchsmengenzählers erfasst wird. Beide Informationen können an die Zentrale gesendet werden und dort kann dieser Zählerstand verwendet wird, um eine Verbrauchsmenge zu bestimmen und gegebenenfalls einem Tarif zuzuordnen.

Gemäß einem Ausführungsbeispiel wird vorgeschlagen, dass die Zählerschnittstelleneinrichtung und/oder die Zentrale abhängig vom erfassten Schaltzustand die erfassten Zählerstände des Verbrauchsmengenzählers zu unterschiedlichen Tarifgruppen zuordnet. Dabei sind vorzugsweise ein erster und ein zweiter Tarif gemeint. Je nach Schaltlage werden die Messwerte verwendet, um Verbrauchsmengen zu bestimmen und dem ersten bzw. dem zweiten Tarif zuzuordnen. So kann beispielsweise im geschlossenen Schaltzustand eine Zuordnung zu einem Niedertarif und in einem geöffneten Schaltzustand eine Zuordnung zu einem Hochtarif erfolgen.

Wie bereits erwähnt, kann die Zeithoheit innerhalb der Zählerschnittstelleneinrichtung und/oder der Zentrale sein. Es kann gemäß einem Ausführungsbeispiel möglich sein, dass eine Synchronisation der Zeitinformation zwischen der Doppeltarifschalteinrichtung und der Zählerschnittstelleneinrichtung und/oder der Zentrale erfolgt. Die Zählerschnittstelleneinrichtung führt die Zeitsynchronisation durch und stellt somit sicher, dass die Schaltzeitpunkte in der Doppeltarifschalteinrichtung korrekt sind, insbesondere synchron mit der Zeit der Zählerschnittstelleneinrichtung.

Ein weiterer Aspekt ist ein Verfahren zum Betreiben einer Doppeltarifschalteinrichtung, bei dem Schaltsignale in einem Empfänger empfangen werden, von einem Schalter abhängig von dem empfangenen Schaltsignal eine Verbindung zwischen einem Verbraucher und einem elektrischen Energieversorgungsnetz geschaltet wird, welches dadurch gekennzeichnet ist, dass ein Schaltzustand des Schalters erfasst und der erfasste Schaltzustand über eine Kommunikationsschnittstelle ausgegeben wird. Mit Hilfe des gegenständlichen Verfahrens ist es möglich, Informationen über einen Schaltzustand auszugeben und beispielsweise einer Zählerschnittstelleneinrichtung zur Verfügung zu stellen, um Doppeltarife dort und/oder in einer Zentrale abzubilden. Dabei wird mit Hilfe des gegenständlichen Verfahrens das Schalten des Schalters in der Schalteinrichtung nach herkömmlichen Verfahren durchgeführt, beispielsweise vorzugsweise abhängig von einer Schaltuhr, einem Rundsteuergerät oder dergleichen, die Schaltlage des Schalters jedoch zusätzlich ausgegeben, um von einer Zählerschnittstelleneinrichtung und/oder einer Zentrale ausgewertet werden zu können.

Gemäß einem Ausführungsbeispiel wird vorgeschlagen, dass der erfasste Schaltzustand von einer Zählerschnittstelleneinrichtung empfangen wird und mit einem gespeicherten Schaltzustand verglichen wird. Hierdurch kann in der Zählerschnittstelleneinrichtung festgestellt werden, ob sich der Schaltzustand verändert hat oder nicht. Es ist vorteilhaft, wenn in der Zählerschnittstelleneinrichtung stets der aktuelle Schaltzustand gespeichert ist. Wird eine neue Information zu einem erfassten Schaltzustand empfangen, kann diese Information mit dem gespeicherten Schaltzustand verglichen werden und bei einer Änderung kann darauf geschlossen werden, dass sich der Schaltzustand geändert hat. In diesem Fall kann durch die Zählerschnittstelleneinrichtung eine Abfrage eines Messwerts von einem Verbrauchsmengenzähler folgen.

Aus diesem Grund wird gemäß einem vorteilhaften Ausführungsbeispiel vorgeschlagen, dass bei einem veränderten Schaltzustand ein Zählerstand von einem Verbrauchsmengenzähler durch die Zählerschnittstelleneinrichtung erfasst wird.

Gemäß einem vorteilhaften Ausführungsbeispiel kann es auch möglich sein, dass innerhalb einer Doppeltarifschalteinrichtung eine Mehrzahl (zumindest zwei) von Schaltern vorgesehen ist. Diese Mehrzahl von Schaltern kann beispielsweise einerseits ein Schalter für einen Verbraucher und andererseits ein Schalter für einen Einspeiser sein. Insbesondere Einspeiser nach dem EEG Gesetz, beispielsweise Fotovoltaikanlagen, Windkraftanlagen, Biogasanlagen, KWK-Anlagen oder dergleichen können ebenfalls abgeschaltet werden. Solche Schaltereignisse können mit Hilfe der gegenständlichen Doppeltarifschalteinrichtung ebenfalls über die Zählerschnittstelleneinrichtung erfasst werden, ohne dass die Zählerschnittstelleneinrichtung Schaltbefehle in die Tarifschalteinrichtung einspeisen muss. Somit kann es möglich sein, innerhalb der Zählerschnittstelleneinrichtung zu überprüfen, ob Einspeiser tatsächlich erfolgreich abgeschaltet wurden.

Auch ist es denkbar, dass, wie erwähnt, ein Schaltbefehl über ein Controllable Load System in die Doppeltarifschalteinrichtung eingespeist wird. Mit Hilfe eines solchen Schaltbefehls kann es möglich sein, einen innerhalb der Doppeltarifschalteinrichtung vorhandenen Schaltbefehl zu übersteuern. Die Doppeltarifschalteinrichtung kann beispielsweise über Rundsteuersignale oder eine Schaltuhr geschaltet sein. Wird ein Schaltsignal über ein CLS empfangen, kann dieses Schaltsignal höher priorisiert sein und die internen Schaltsignale der Doppeltarifschalteinrichtung übersteuern. Dies kann gerade zur Netzstabilisierung sinnvoll sein, insbesondere wenn Verbraucher nach einem Niedertarif elektrische Energie von dem Netz beziehen sollen, wenn in das Netz erhebliche Mengen an elektrischer Energie eingespeist werden.

Auch kann es möglich sein, dass die Zustandsermittlungseinrichtung mit einer LMN-Schnittstelle als eigenständig eingehaustes Gerät an oder in der Doppeltarifschalteinrichtung vorgesehen ist. Hierdurch kann eine Nachrüstung herkömmlicher Doppeltarifschalteinrichtungen vereinfacht werden.

Auch kann die Zustandsermittlungseinrichtung in der Doppeltarifschalteinrichtung in einem gemeinsamen Gehäuse eingehaust sein.

Es versteht sich, dass der Gegenstand nicht auf Doppeltarife beschränkt ist, sondern lediglich einen Doppeltarif als mögliche kleinste Anzahl an Tarifen zu verstehen ist. Ein Mehrfachtarif, also mehr als zwei Tarife kann ebenfalls durch einen entsprechenden Schalter in der Doppeltarifschalteinrichtung abgebildet werden und dessen Schaltzustand gegenständlich erfasst und ausgewertet werden.

Die zuvor genannten Verfahren können auch als Computerprogramm oder als auf einem Speichermedium gespeichertes Computerprogramm realisiert werden. Hierbei kann zählerseitig und/oder eichstellenseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: ein System mit einer gegenständlichen Doppeltarifschalteinrichtung nach einem Ausführungsbeispiel;
- Fig. 2: eine Detailansicht einer Doppeltarifschalteinrichtung nach einem Ausführungsbeispiel;
- Fig. 3: ein System mit einer Mehrzahl von Doppeltarifschalteinrichtungen nach einem Ausführungsbeispiel;
- Fig. 4: ein Ablauf eines gegenständlichen Verfahrens nach einem Ausführungsbeispiel.

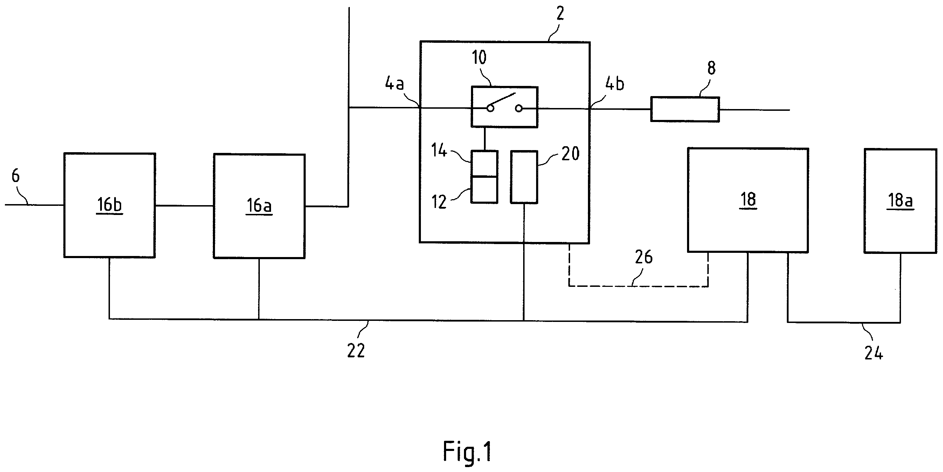

In der Fig. 1 ist eine Doppeltarifschalteinrichtung 2 dargestellt. Die Doppeltarifschalteinrichtung 2 umfasst dabei einen Eingang 4a zum Anschluss an ein Energieversorgungsnetz 6 sowie einen Ausgang 4b zum Anschluss an einen Verbraucher 8.

Der Eingang 4a ist mit dem Ausgang 4b über einen Schalter 10 verbunden.

Die Doppeltarifschalteinrichtung 2 ist dafür eingerichtet, abhängig von Tarifzeiten den Schalter 10 ein- und auszuschalten und mithin den Verbraucher 8 abhängig von Schaltzeiten mit dem Energieversorgungsnetz 6 zu verbinden. Dies kann beispielsweise in einer Mehr(Doppel)tarifstruktur sinnvoll sein, in der der Verbraucher 8 zu Zeiten eines niedrigen Tarifs mit Energie aus dem Energieversorgungsnetz versorgt werden soll, zu Hochtarifzeiten jedoch nicht. Die Zeiten, zu denen der Schalter 10 geöffnet und geschlossen werden, sind entweder in einer Schaltuhr 12 fest einprogrammiert oder können über einen Rundsteuerempfänger (nicht gezeigt) empfangen werden.

Der Schaltbefehl wird von der Schaltuhr 12 bzw. dem Rundsteuerempfänger (nicht gezeigt) an den Empfänger 14 übermittelt. Der Empfänger 14 ist in Wirkverbindung mit dem Schalter 10, der beispielsweise als Relais ausgelegt sein kann. Bei einem Einschaltbefehl wird der Schalter 10 geschlossen und bei einem Ausschaltbefehl wird der Schalter 10 geöffnet. Die Zeiten, zu denen Ein- und Ausschaltbefehle übermittelt werden, sind in der Schaltuhr 12 fest programmiert und können beispielsweise eine Doppeltarifstruktur abbilden.

Der Energieverbrauch des Verbrauchers 8 wird mit Hilfe von sogenannten Verbrauchsmengenzählern 16a, 16b erfasst. Die Verbrauchsmengenzähler 16a, 16b können sogenannte Stromzähler sein. Der Verbrauchsmengenzähler 16a kann dabei beispielsweise ein herkömmlicher Ferrariszähler sein. Auch ist es möglich, dass ein Verbrauchsmengenzähler 16b als Doppeltarifzähler, insbesondere als Smart Meter gebildet ist. Es sind in Fig. 1 mehrere Verbrauchsmengenzähler 16a, b dargestellt, es ist jedoch verständlich, dass auch nur ein Verbrauchsmengenzähler notwendig sein kann.

Um nun den Doppeltarif abbilden zu können, insbesondere unter Verwendung eines Smart Meter Gateways 18, ist es notwendig, dass zumindest das Smart Meter Gateway 18, kumulativ oder alternativ auch eine Zentrale 18a Kenntnis von dem Schaltzustand des Schalters 10 einerseits und der Messwerte der Verbrauchsmengenzähler 16a, b andererseits hat. Es sei angemerkt, dass die beschriebene Auswertung der Informationen in dem Smart Meter Gateway 18 oder der Zentrale 18a erfolgen kann. Die diesbezüglich beschriebenen Funktionen gelten gleichermaßen für das Smart Meter Gateway 18 wie auch für die Zentrale 18a.Es wird gegenständlich vorgeschlagen, dass eine Zustandsermittlungseinrichtung 20 als Zusatz zu der Doppeltarifschalteinrichtung 2 in der Doppeltarifschalteinrichtung 2 vorgesehen ist. Die Zustandsermittlungseinrichtung 20 verfügt über eine Schnittstelle an ein Local Metrological Network 22. Das Local Metrological Network 22 ist beispielsweise als RS485-Protokoll Bus ausgeführt. Das LMN 22 ist einerseits mit den Smart Meter Gateway 18 und andererseits mit dem Verbrauchsmengenzähler 16a, 16b verbunden.

Die Zustandsermittlungseinrichtung 20 erfasst den Schaltzustand des Schalters 10 und somit, ob der Schalter 10 ein- bzw. ausgeschaltet ist. Zusätzlich kann die Zustandsermittlungseinrichtung 20 beispielsweise eine Identifikation des Schalters 10 bzw. der Doppeltarifschalteinrichtung 2 erfassen oder einprogrammiert haben. Die Identifikation zusammen mit dem Schaltzustand kann durch die Zustandsermittlungseinrichtung 22 über eine Kommunikationsschnittstelle auf das LMN 22 übertragen werden. Dies erfolgt gegenständlich vorzugsweise bei jeder Veränderung des Schaltzustands des Schalters 10. Die Veränderung des Schaltzustands wird dabei ausgelöst durch den Empfänger 14 bzw. die Schaltuhr 12. Über das LMN 22 werden in der Zustandsermittlungseinrichtung 20 keine Schaltbefehle empfangen. Vielmehr werden lediglich Informationen über die Schaltzustände ausgesendet bzw. können ausgelesen werden.

Bei einem Aussenden bzw. Auslesen eines Schaltzustands auf den LMN 22 wird diese Information zunächst auf dem Smart Meter Gateway 18 empfangen und ggf. von dort an eine Zentrale gesendet werden.. In dem Smart Meter Gateway 18 und/oder der Zentrale 18awird der empfangene Schaltzustand mit einem gespeicherten, vorherigen Schaltzustand verglichen und bei eine Veränderung wird darauf geschlossen, dass sich der Schaltzustand des Schalters 10 verändert hat. In diesem Moment wird in dem Smart Meter Gateway 18 und/oder der Zentrale 18a die Zeit erfasst und überprüft, welcher Tarif anwendbar ist. Gleichzeitig wird von dem Smart Meter Gateway 18 über das LMN 22 ein Zählerstand zumindest eines der Verbrauchsmengenzähler 16a, 16b erfragt. Aus den erfragten Zählerständen werden Verbrauchsmengen berechnet. Diese Information kann an die Zentrale 18a gesendet werden. Abhängig vom jeweiligen Tarif, d.h. abhängig von der Zeit und der jeweiligen Tarifstruktur wird in dem Smart Meter Gateway 18 und/oder der Zentrale 18a dann die jeweilige Verbrauchsmenge einem bestimmten Tarif zugeordnet und dort gespeichert. Insbesondere kann ein Niedertarif und ein Hochtarif verwendet werden. Die gespeicherten Verbrauchsmengen können in den Smart Meter Gateway 18 weiterverarbeitet werden und insbesondere über ein Weitverkehrsnetz 24 an einen Messstellenbetreiber bzw. die Zentrale 18a übermittelt werden.

Mit Hilfe des gezeigten Systems ist es möglich, über ein LMN 22 Schaltzustände von Doppeltarifschalteinrichtungen 2 zu erfassen, ohne Schaltbefehle in die Doppeltarifschalteinrichtung 2 über das LMN einzuspeisen.

Als weitere Option kann es möglich sein, über ein sogenanntes Controllable Load System 26 eine Verbindung zwischen dem Smart Meter Gateway 18 und der Doppeltarifschalteinrichtung 2 herzustellen. Über dieses CLS kann das Smart Meter Gateway 18 einen Schaltbefehl in die Doppeltarifschalteinrichtung 2 senden und der Schalter 10 kann dann unabhängig von der Schaltuhr 12 und dem Empfänger 14 geschaltet werden. Hierdurch kann ein Übersteuern des Schalters 10 durch das Smart Meter Gateway 18 erfolgen. Dies kann beispielsweise im Falle von Doppeltarifschalteinrichtung 2 sinnvoll sein, die zum Schalten von Einspeisern, insbesondere nach dem EEG Gesetz, beispielsweise Fotovoltaikanlagen, Windkraftanlagen, Kraftwärmekopplungsanlagen oder dergleichen sein.

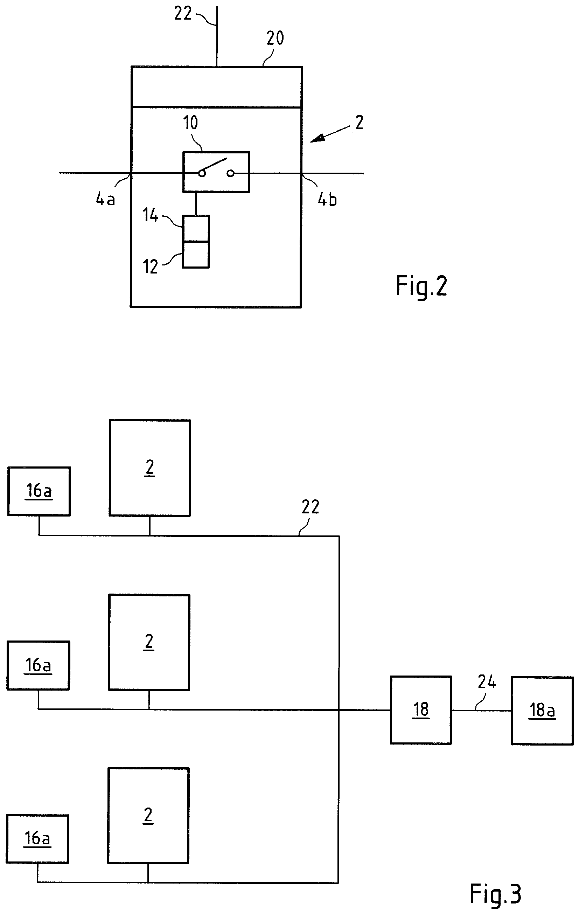

Fig. 2 zeigt ein alternatives Ausführungsbeispiel einer Doppeltarifschalteinrichtung 2. Die Doppeltarifschalteinrichtung 2 entspricht der Doppeltarifschalteinrichtung 2 gemäß Fig. 1 mit dem Unterschied, dass in der Doppeltarifschalteinrichtung 2 gemäß Fig. 2 keine Zustandsermittlungseinrichtung 20 integriert ist. Vielmehr ist dort die Zustandsermittlungseinrichtung 20 als eigenständige Baugruppe an der Doppeltarifschalteinrichtung 2 angeordnet und kann somit als Anbauteil dienen. Hierdurch ist es möglich, bestehende Doppeltarifschalteinrichtungen 2 mit einer Zustandsermittlungseinrichtung 20 zu ergänzen. Bestehende Doppeltarifschalteinrichtungen 2 müssen somit nicht ausgetauscht werden, sondern können mit einer Zustandsermittlungseinrichtung 20 gemäß Fig. 2 nachgerüstet werden.

Fig. 3 zeigt ein weiteres Ausführungsbeispiel, bei dem ein einziges Smart Meter Gateway 18 eine Mehrzahl von Doppeltarifschalteinrichtungen 2 überwacht.

Die Doppeltarifschalteinrichtungen 2 sowie die Verbrauchsmengenzähler 16a entsprechen denen gemäß Fig. 1. Das Local Metrological Network 22 ist gemäß der Fig. 3 an allen Doppeltarifschalteinrichtungen 2, allen Verbrauchsmengenzählern 16a und dem Smart Meter Gateway 18 angeschlossen. Mit Hilfe des gegenständlichen Systems ist es möglich, Schaltzustände einer Mehrzahl von Doppeltarifschalteinrichtungen 2 in einem einzigen Smart Meter Gateway 18 zu erfassen. Hierzu ist es lediglich notwendig, dass zusammen mit der Information über einen Schaltzustand eines Schalters 10 eine Identifikation des Schalters 10 bzw. der dem Schalter 10 zugeordneten Doppeltarifschalteinrichtungen 2 auf dem LMN 22 zu übermitteln. In dem Smart Meter Gateway 18 wird diese Information verwendet, um einerseits den Tarifanwendungsfall für die jeweilige Doppeltarifschalteinrichtung zu ermitteln, den entsprechenden Tarif und anschließend auch den dazugehörigen Verbrauchsmengenzähler 16a abzufragen. Hierzu kann in dem Smart Meter Gateway 18 eine Zuordnung von Doppeltarifschalteinrichtungen 2 bzw. Schaltern 10 zu entsprechenden Verbrauchsmengenzählern 16a programmiert sein. Je nach Zuordnung wird bei einem Schaltereignis ein entsprechender Verbrauchsmengenzähler 16a abgefragt und in dem Smart Meter Gateway 18 werden die Verbrauchsdaten erfasst und entsprechenden Tarifen zugeordnet. Für die jeweiligen Doppeltarifschalteinrichtungen 2 bzw. die jeweiligen Verbrauchsmengenzähler 16 kann das Smart Meter Gateway 18 die entsprechenden Verbrauchsdaten zu den jeweiligen Tarifen über das Weitverkehrsnetz 24 versenden. Die von dem Smart Meter Gateway erfassten, oben genannten Daten können auch zunächst insbesondere von dem Smart Meter Gateway 18 über das Weitverkehrsnetz 24 an die Zentrale 18a übermittelt werden. Die zuvor beschriebene Auswertung der Daten kann dann alternativ oder kumulativ zum Smart Meter Gateway 18 in der Zentrale 18a erfolgen.

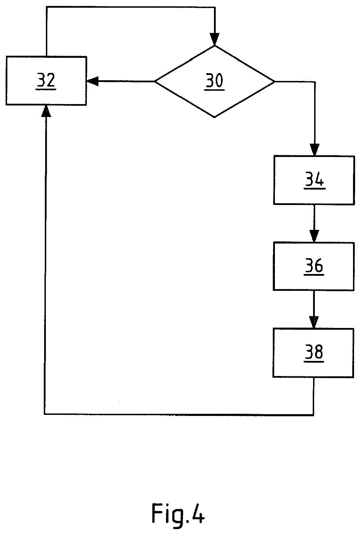

Fig. 4 zeigt schematisch den Ablauf eines gegenständlichen Verfahrens.

In dem Smart Meter Gateway 18 wird zunächst eine Information zu einem Schaltzustand des Schalters 10 empfangen (30). Die empfangene Information zu dem Schaltzustand des Schalters 10 wird mit einer gespeicherten Information zu einem Schaltzustand verglichen. Ist der Schaltzustand nicht verändert, wird in einem Wartezustand eine vorbestimmte Zeit gewartet (32).

Hat sich die Lage des Schalters verändert, wird zunächst die veränderte Information abgespeichert (34). Anschließend wird von einem Verbrauchsmengenzähler 16 ein Messwert erfragt (36). Schließlich wird die in dem Smart Meter Gateway 18 bereitgestellte Zeit ermittelt und der jeweilige Tarif festgestellt. Die Messwerte werden dem jeweiligen Tarif zugeordnet und abgespeichert (38). Dann kehrt der Prozess in den Wartezustand (32) zurück, bis eine veränderte Schaltposition erreicht ist und diese in dem Schritt (30) erkannt wird.

Der Schaltzustand und der Messwert kann auch erst vom Smart Meter Gateway 18 an die Zentrale 24 übermittelt werden. Die in der Zentrale 18a bereitgestellte Zeit wird ermittelt und der jeweilige Tarif festgestellt. Die Messwerte werden dem jeweiligen in der Zentrale 18a einem Tarif zugeordnet und abgespeichert (38). Dann kehrt der Prozess in den Wartezustand (32) zurück, bis eine veränderte Schaltposition erreicht ist und diese in dem Schritt (30) erkannt wird.

### Bezugszeichenliste

- 2: Doppeltarifschalteinrichtung;
- 4a: Eingang;
- 4b: Ausgang;
- 6: Energieversorgungsnetz;
- 8: Verbraucher;
- 10: Schalter;
- 12: Schaltuhr;
- 14: Empfänger;
- 16a, b: Verbrauchsmengenzähler;
- 18: Smart Meter Gateway;
- 18a: Zentrale
- 20: Zustandsermittlungseinrichtung;
- 22: Local Metrological Network;
- 24: Weitverkehrsnetz;
- 26: Controllable Load System;
- 30: Vergleich;
- 32: Warten;
- 34: Speichern;
- 36: Zählerstand abfragen;
- 28: Tarifzuordnung

## Patentansprüche

1. System mit einer Doppeltarifschalteinrichtung (2) umfassend:
- einen Empfänger (14) eingerichtet zum Empfangen von Schaltsignalen,
- einen Schalter (10) eingerichtet zum Schalten einer Verbindung zwischen einem Verbraucher (8) und einem elektrischen Energieversorgungsnetz (6), wobei
- eine Zustandsermittlungseinrichtung (20) einen Schaltzustand des Schalters (10) erfasst und den erfassten Schaltzustand des Schalters (10) über eine Kommunikationsschnittelle ausgibt,
- eine Zählerschnittelleneinrichtung (18) und einen Verbrauchsmengenzähler (16a, b), bei dem
- die Zählerschnittelleneinrichtung (18) mit der Kommunikationsschnittstelle elektrisch verbunden ist und die Zählerschnittelleneinrichtung (18) über die Kommunikationsschnittstelle den Schaltzustand des Schalters (10) erfasst,
**dadurch gekennzeichnet,**
- **dass** die Zählerschnittstelleneinrichtung (18) dazu eingerichtet ist, zumindest bei einer empfangenen Änderung des Schaltzustands des Schalters (10) einen Zählerstand des Verbrauchsmengenzählers (16a, b) zu erfassen und
- die Zählerschnittstelleneinrichtung (18) dazu eingerichtet ist, den erfassten Schaltzustand des Schalters (10) und den erfassten Zählerstand des Verbrauchsmengenzählers (16a, b) an eine Zentrale (18a) zu übermitteln.

2. System nach Anspruch 1,
**dadurch gekennzeichnet,**
- **dass** der Empfänger (14) ein Rundsteuersignalempfänger ist und zum Empfangen von Rundsteuersignalen eines zentralen Servers eingerichtet ist, insbesondere zum Empfangen von Rundsteuersignalen über Leitungen des Energieversorgungsnetzes (6) und/oder
- **dass** der Empfänger (14) zum Empfangen von Schaltsignalen einer in der Doppeltarifschalteinrichtung (2) angeordneten Schaltuhr (12) eingerichtet ist.

3. System nach Anspruch 1,
**dadurch gekennzeichnet,**
- **dass** die Kommunikationsschnittstelle gemäß einem Local Metrological Network (22) (LMN) Protokoll eingerichtet ist und/oder dass die Kommunikationsschnittstelle als serielle Schnittstelle zum Verbinden mit sowohl einem Verbrauchsmengenzähler (16a, b) sowie einer Zählerschnittelleneinrichtung (18) eingerichtet ist und/oder dass die Kommunikationsschnittstelle als RS485 Schnittstelle eingerichtet ist.

4. System nach einem der vorangehenden Ansprüche,
**dadurch gekennzeichnet,**
- **dass** die Zustandsermittlungseinrichtung (20) ein Lagesensor eingerichtet zur Erfassung der Schaltposition des Schalters (10) ist und/oder dass der Schalter (10) ein Schaltrelais ist.

5. System nach einem der vorangehenden Ansprüche,
**dadurch gekennzeichnet,**
- **dass** die Zustandsermittlungseinrichtung (20) zum Empfangen einer Abfrage des Schaltzustands und zum darauffolgenden Senden des erfassten Schaltzustands eingerichtet ist und/oder dass die Zustandsermittlungseinrichtung (20) zum automatischen Senden des erfassten Schaltzustands, insbesondere bei einer Änderung des Schaltzustands eingerichtet ist..

6. System nach einem der vorangehenden Ansprüche,
**dadurch gekennzeichnet,**
- **dass** der Schalter (10) zusätzlich über eine Schnittstelle mit einem Controllable Load System (CLS) (26) verbunden ist.

7. System nach einem der vorangehenden Ansprüche,
**dadurch gekennzeichnet,**
- **dass** eine Energieversorgung der Doppeltarifschalteinrichtung (2) über einen Anschluss an das Energieversorgungsnetz (6) gebildet ist oder dass eine Energieversorgung der Doppeltarifschalteinrichtung (2) über die Kommunikationsschnittstelle durch das LMN gebildet ist.

8. System nach Anspruch 1,
**dadurch gekennzeichnet,**
- **dass** die Zählerschnittstelleneinrichtung (18) mit der Kommunikationsschnittstelle und zumindest einem Verbrauchsmengenzähler (16a, b) über eine gleiche Schnittstelle verbunden ist.

9. System nach einem der Ansprüche 1 bis 8,
**dadurch gekennzeichnet,**
- **dass** die Zählerschnittstelleneinrichtung (18) abhängig vom erfassten Schaltzustand den erfassten Zählerstand des Verbrauchsmengenzählers (16a, b) jeweils einer Tarifgruppe zuordnet oder
- **dass** die Zentrale (18a) abhängig vom erfassten Schaltzustand den erfassten Zählerstand jeweils einer Tarifgruppen zuordnet.

10. System nach einem der Ansprüche 1 bis 9,
**dadurch gekennzeichnet,**
- **dass** die Zählerschnittstelleneinrichtung (18) Zeitinformationen mit der Doppeltarifschalteinrichtung (2) austauscht.

11. Verfahren zum Betreiben einer Doppeltarifschalteinrichtung (2) bei dem,
- Schaltsignale in einem Empfänger (14) empfangen werden,
- von einem Schalter (10) abhängig von dem empfangenen Schaltsignal eine Verbindung zwischen einem Verbraucher (8) und einem elektrischen Energieversorgungsnetz (6) geschaltet wird, wobei
- ein Schaltzustand des Schalters (10) erfasst und der erfasste Schaltzustand über eine Kommunikationsschnittelle an eine Zählerschnittstelleneinrichtung ausgegeben wird.
**dadurch gekennzeichnet,**
- **dass** die Zählerschnittstelleneinrichtung (18) zumindest bei einer empfangenen Änderung des Schaltzustands einen Zählerstand eines Verbrauchsmengenzählers (16a, b) erfasst und
- die Zählerschnittstelleneinrichtung (18) den erfassten Schaltzustand und den erfassten Zählerstand des Verbrauchsmengenzählers (16a, b) an eine Zentrale (18a) übermittelt.

12. Verfahren nach Anspruch 11,
**dadurch gekennzeichnet,**
- **dass** der erfasste Schaltzustand mit einem gespeicherten Schaltzustand verglichen wird.

## Claims

1. System comprising a double tariff switching device (2):
- a receiver (14) adapted to receive switching signals,
- a switch (10) arranged to switch a connection between a consumer (8) and an electrical power supply network (6), wherein
- a state determination device (20) detects a switching state of the switch (10), and outputs the detected switching state of the switch (10) via a communication interface,
- a meter interface device (18) and a consumption quantity meter (16a, b), in which
- the meter interface device (18) is electrically connected to the communication interface and the meter interface device (18) detects the switching state of the switch (10) via the communication interface,
**characterized in that**
- the meter interface device (18) is arranged to obtain, at least upon receiving a change in the switching state of the switch (10), a meter reading of the consumption quantity meter (16a, b), and
- the meter interface device (18) is arranged to transmit the detected switching state of the switch (10) and the detected meter reading of the consumption quantity meter (16a, b) to a central station (18a).

2. System according to claim 1,
**characterized in that**
- the receiver (14) is a ripple control signal receiver and is arranged for receiving ripple control signals of a central server, in particular for receiving ripple control signals via lines of the power supply network (6) and/or
- the receiver (14) is arranged to receive switching signals from a time switch (12) arranged in the double tariff switching device (2).

3. System according to claim 1,
**characterized in that**
- the communication interface is arranged in accordance with a Local Metrological Network (22) (LMN) protocol and/or **in that** the communication interface is arranged as a serial interface for connection to both a consumption quantity meter (16a, b) and a meter interface device (18) and/or **in that** the communication interface is arranged as an RS485 interface.

4. System based on one of the preceding claims,
**characterized in that**
- the state determination device (20) is a position sensor which is arranged to detect the switching position of the switch (10) and/or **in that** the switch (10) is a switching relay.

5. System based on one of the preceding claims,
**characterized in that**
- the state determination device (20) is arranged to receive an interrogation of the switching state and to subsequently transmit the detected switching state and/or in that the state determination device (20) is arranged to automatically transmit the detected switching state, in particular in the event of a change in the switching state.

6. System according to one of the preceding claims,
**characterized in that**
- the switch (10) is additionally connected via an interface to a controllable load system (CLS) (26).

7. System according to one of the preceding claims,
**characterized in that**
- a power supply for the double tariff switching device (2) is formed via a connection to the power supply network (6), or **in that** a power supply for the double tariff switching device (2) is formed via the communication interface by the LMN.

8. System according to claim 1,
**characterized in that**
- the meter interface device (18) is connected to the communication interface and at least one consumption quantity meter (16a, b) via an identical interface.

9. System according to any of claims 1 to 8,
**characterized in that**
- the meter interface device (18) assigns the detected meter reading of the consumption quantity meter (16a, b) to a tariff group as a function of the detected switching state, respectively, or
- the central station (18a) assigns the detected meter reading to a tariff group as a function of the detected switching state, respectively.

10. System according to one of the claims 1 to 9,
**characterized in that**
- the meter interface device (18) exchanges time information with the double tariff switching device (2).

11. Method for operating a double tariff switching device (2), in which,
- switching signals are received in a receiver (14),
- a connection between a load (8) and an electrical power supply network (6) is switched by a switch (10) as a function of the received switching signal, wherein
- a switching state of the switch (10) is obtained and the obtained switching state is output to a meter interface device via a communication interface.
**characterized in that**
- the meter interface device (18) obtains, at least upon receiving a change in the switching state of the switch (10), a meter reading of the consumption quantity meter (16a, b), and
- the meter interface device (18) transmits the obtained switching state and the obtained meter reading of the consumption quantity meter (16a, b) to a central station (18a).

12. Method according to claim 11,
**characterized in that**
- the detected switching state is compared with a stored switching state.

## Revendications

1. Système doté d'un dispositif de commutation à double tarification (2), ledit dispositif comprenant :
- un récepteur (14) agencé pour recevoir des signaux de commutation,
- un commutateur (10) agencé pour commuter une connexion entre un consommateur (8) et un réseau d'alimentation en énergie électrique (6),
- où un dispositif de détermination d'état (20) détecte un état de commutation du commutateur (10), et délivre, via une interface de communication, l'état de commutation du commutateur (10), qui a été détecté,
- un dispositif d'interface de compteur (18) et un compteur de volume de consommation (16 a, b), dans lequel le dispositif d'interface de compteur (18) est connecté électriquement à l'interface de communication et dans lequel le dispositif d'interface de compteur (18) détecte, via l'interface de communication, l'état de commutation du commutateur (10),
**caractérisé**
- **en ce que** le dispositif d'interface de compteur (18) est agencé pour enregistrer une indication de consommation du compteur de volume de consommation (16a, b), au moins dans le cas d'une modification de l'état de commutation du commutateur (10), qui a été reçue, et
- **en ce que** le dispositif d'interface de compteur (18) est agencé pour transmettre à une centrale (18a), l'état de commutation du commutateur (10), qui a été détecté, et l'indication de consommation du compteur de volume de consommation (16a, b), qui a été enregistrée.

2. Système selon la revendication 1,
**caractérisé**
- **en ce que** le récepteur (14) est un récepteur de signaux de télécommande centralisée et est agencé pour recevoir des signaux de télécommande centralisée provenant d'un serveur central, en particulier pour recevoir des signaux de télécommande centralisée, envoyés via des conduites du réseau d'alimentation en énergie (6), et/ou
- **en ce que** le récepteur (14) est agencé pour recevoir des signaux de commutation provenant d'une minuterie (12) disposée dans le dispositif de commutation à double tarification (2).

3. Système selon la revendication 1,
**caractérisé**
- **en ce que** l'interface de communication est agencée conformément à un protocole de réseau métrologique local (LMN) (22) et/ou en ce que l'interface de communication est agencée comme une interface série servant à la connexion aussi bien avec un compteur de volume de consommation (16a, b) qu'avec un dispositif d'interface de compteur (18) et/ou en ce que l'interface de communication est agencée comme une interface RS485.

4. Système selon l'une quelconque des revendications précédentes,
**caractérisé**
- **en ce que** le dispositif de détermination d'état (20) est agencé comme un capteur de position servant à la détection de la position de commutation du commutateur (10) et/ou en ce que le commutateur (10) est un relais tout ou rien.

5. Système selon l'une quelconque des revendications précédentes,
**caractérisé**
- **en ce que** le dispositif de détermination d'état (20) est agencé pour servir à la réception d'une interrogation de l'état de commutation et pour servir à l'envoi, qui s'ensuit, de l'état de commutation détecté et/ou en ce que le dispositif de détermination d'état (20) est agencé pour servir à l'envoi automatique de l'état de commutation détecté, en particulier dans le cas d'une modification de l'état de commutation.

6. Système selon l'une quelconque des revendications précédentes,
**caractérisé**
- **en ce que** le commutateur (10) est connecté en outre, via une interface, à un système de charge contrôlable (CLS) (26).

7. Système selon l'une quelconque des revendications précédentes,
**caractérisé**
- **en ce qu'**une alimentation en énergie du dispositif de commutation à double tarification (2) est formée par un raccordement à un réseau d'alimentation en énergie (6), ou bien en ce qu'une alimentation en énergie du dispositif de commutation à double tarification (2) est formée par le réseau LMN, via l'interface de communication.

8. Système selon la revendication 1,
**caractérisé**
- **en ce que** le dispositif d'interface de compteur (18) est connecté, via une même interface, à l'interface de communication et à au moins un compteur de volume de consommation (16a, b).

9. Système selon l'une quelconque des revendications 1 à 8,
**caractérisé**
- **en ce que** le dispositif d'interface de compteur (18), en fonction de l'état de commutation détecté, affecte à chaque fois à un barème tarifaire, l'indication de consommation du compteur de volume de consommation (16a, b), qui a été enregistrée, ou bien
- **en ce que** la centrale (18a), en fonction de l'état de commutation détecté, affecte à chaque fois à un barème tarifaire, l'indication de consommation du compteur, qui a été enregistrée.

10. Système selon l'une quelconque des revendications 1 à 9,
**caractérisé**
- **en ce que** le dispositif d'interface de compteur (18) échange des informations de temps avec le dispositif de commutation à double tarification (2).

11. Procédé permettant de faire fonctionner un dispositif de commutation à double tarification (2), procédé au cours duquel :
- des signaux de commutation sont reçus dans un récepteur (14),
- une connexion est commutée entre un consommateur (8) et un réseau d'alimentation en énergie électrique (6), par un commutateur (10), en fonction du signal de commutation reçu,
- où un état de commutation du commutateur (10) est détecté, et l'état de commutation détecté est fourni, via une interface de communication, à un dispositif d'interface de compteur,
**caractérisé**
- **en ce que** le dispositif d'interface de compteur (18) enregistre, au moins dans le cas d'une modification de l'état de commutation, qui a été reçue, une indication de consommation du compteur de volume de consommation (16a, b), et
- **en ce que** le dispositif d'interface de compteur (18) transmet à une centrale (18a), l'état de commutation détecté et l'indication de consommation du compteur de volume de consommation (16a, b), qui a été enregistrée.

12. Procédé selon la revendication 11,
**caractérisé**
- **en ce que** l'état de commutation détecté est comparé à un état de commutation stocké en mémoire.
